# FASCICULE DE BREVET EUROPEEN

(11) **EP 1 132 237 B1**
(45) Date de publication et mention de la délivrance du brevet: **27.12.2006**
(21) Numéro de dépôt: 01400608.4
(22) Date de dépôt: 08.03.2001
(51) Int. Cl.: B60J 5/10, E05B 5/00

(54) **Ouvrant de véhicule, notamment hayon**
Fahrzeugflügel, insbesondere eine Heckklappe
Vehicle wing, in particular a tailgate

(30) Priorité: 08.03.2000 FR 0002975
(43) Date de publication de la demande: 12.09.2001
(73) Titulaire: COMPAGNIE PLASTIC OMNIUM, 69007 Lyon (FR)
(72) Inventeur: Ader, Stéphanie, 01130 Nantua (FR); Jacquemard, Claude, 01100 Oyonnax (FR); Pommeret, Maelig, 01100 Oynnax (FR)
(74) Mandataire: Remy, Vincent Noel Paul

(56) Documents cités:
- DE-A- 3 719 273
- FR-A- 2 744 754
- GB-A- 1 019 039
- GB-A- 1 426 286

## Description

La présente invention concerne les ouvrants de véhicule en général, et plus particulièrement mais non exclusivement un hayon de véhicule automobile.

Les hayons connus comportent en partie inférieure sur leur face extérieure une poignée servant à les relever.

Cette poignée n'est pas utilisée lors de la fermeture du hayon et de plus elle est souvent proéminente et inesthétique.

On connaît par la demande de brevet français FR-A- 2 744 754 qui divulgue les caractéristiques du préambule de la revendication 1 un dispositif de préhension pour panneau ouvrant arrière d'un véhicule automobile comportant une palette articulée. Lorsque le panneau est fermé, la palette est en position escamotée et n'est donc pas accessible.

Il existe un besoin pour améliorer l'ergonomie et l'esthétique des ouvrants de véhicule.

L'invention a pour objet un nouvel ouvrant de véhicule, notamment un hayon, comportant une face extérieure et une face d'extrémité à l'opposé de la région d'articulation sur le véhicule, une poignée étant intégrée dans ladite face d'extrémité.

L'ouvrant selon l'invention se caractérise par le fait qu'il comporte une ouverture sur la face extérieure de l'ouvrant pour accéder à ladite poignée lorsque l'ouvrant est fermé.

Autrement dit, dans l'invention, la poignée intégrée est accessible en permanence, y compris lorsque l'ouvrant est fermé, contrairement à la demande de brevet français FR-A- 2 744 754 précitée.

Grâce à l'invention, il est possible de réaliser l'ouvrant sans poignée proéminente et avec une ergonomie améliorée.

Dans une réalisation particulière, la poignée présente deux surfaces d'appui, l'une servant à l'ouverture de l'ouvrant et l'autre étant utilisée pour sa fermeture.

Ainsi, on peut utiliser la poignée pour fermer l'ouvrant, ce qui évite d'avoir à appuyer directement sur des régions de la face extérieure de l'ouvrant autour de la poignée.

Ceci est avantageux lorsque le véhicule est sale.

Dans une réalisation particulière, les surfaces d'appui précitées sont constituées par des parois d'une pièce en matière plastique rapportée sur un caisson de l'ouvrant.

De préférence, au moins l'une de ces parois s'appuie sur une portée du caisson, ce qui permet une reprise des efforts.

Dans une réalisation particulière, les surfaces d'appui en question se font face.

De préférence, la poignée comporte une paroi extérieure intégrée dans la face d'extrémité de l'ouvrant, une zone de préhension au centre de cette paroi extérieure et un renfoncement pour recevoir les dernières phalanges (ou phalangettes) de la main de l'utilisateur lors de la fermeture ou de l'ouverture de l'ouvrant.

Dans une réalisation préférée, l'ouvrant comporte une serrure comprenant un organe de commande et la surface d'appui servant à l'ouverture de l'ouvrant est définie par une paroi mobile et/ou déformable, agencée pour agir sur l'organe de commande de la serrure lorsque l'utilisateur exerce une force dessus, lors de l'ouverture de l'ouvrant.

Cette réalisation permet d'intégrer la serrure dans l'ouvrant sans organe de commande apparent sur la face extérieure de l'ouvrant, ce qui est particulièrement esthétique.

De plus, la commande d'ouverture est ainsi située très proche de la serrure, diminuant la longueur de la tringle ou câbles servant à l'actionner, ce qui améliore l'inviolabilité.

La paroi mobile et/ou déformable précitée peut être réalisée sous la forme d'une paroi en matière plastique rigide reliée par une charnière film au reste de la poignée ou par une paroi souple surmoulée ou rapportée sur le reste de la poignée.

La surface de la poignée sur laquelle l'utilisateur appuie peut comporter au moins localement un revêtement malléable, destiné à accroître le confort d'utilisation.

D'autres caractéristiques et avantages de la présente invention ressortiront à la lecture de la description détaillée qui va suivre, d'exemples de réalisation non limitatifs, et à l'examen du dessin annexé, sur lequel :
- la figure 1 est une vue schématique et partielle en perspective d'un hayon de véhicule automobile conforme à l'invention,
- la figure 2 est une coupe partielle dans un plan médian de symétrie du hayon,
- la figure 3 représente isolément la poignée, et
- les figures 4 et 5 illustrent deux variantes de réalisation.

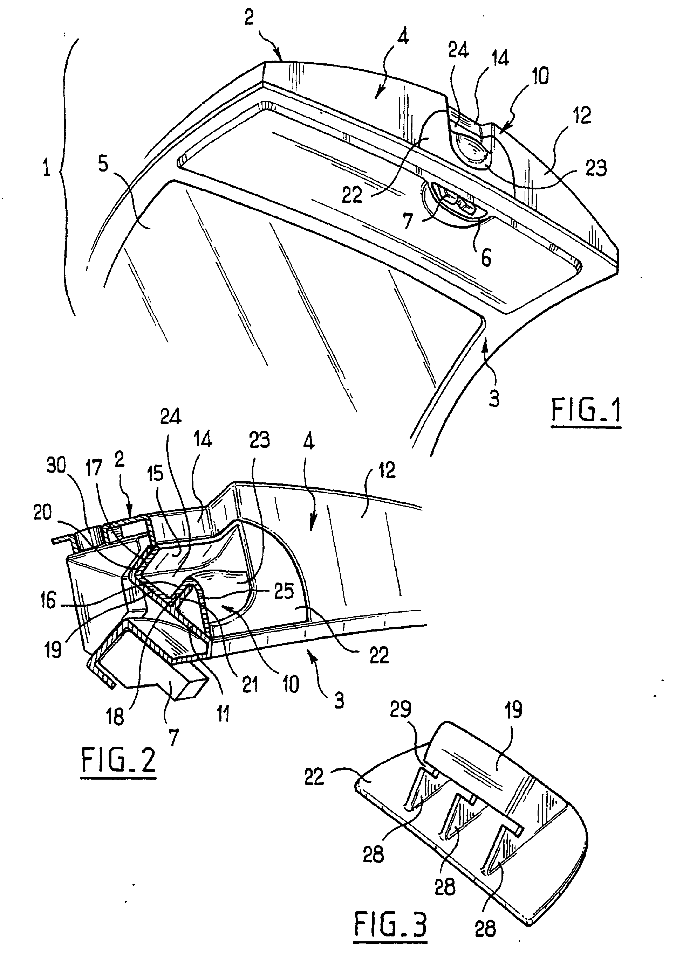

On a représenté, sur la figure 1, un hayon 1 de véhicule automobile en position ouverte, comportant une face extérieure 2, une face intérieure 3 et une face d'extrémité 4.

Le hayon 1 comporte un caisson 12 supportant une vitre 5 et s'articulant du côté opposé à la face d'extrémité 4 sur le véhicule automobile, de manière connue en soi et non représentée dans un souci de simplification du dessin.

Le caisson 12 est réalisé, dans l'exemple de réalisation décrit, dans une matière plastique renforcée.

Le hayon 1 comporte sur sa face intérieure 3 une ouverture 6 donnant sur un mécanisme de serrure 7.

Ce mécanisme de serrure 7 comporte dans l'exemple décrit un bouton de commande 30 permettant de déclencher l'ouverture du hayon 1 depuis sa face extérieure 2.

Conformément à l'invention, le hayon 1 comporte une poignée 10 que l'on voit sur la figure 2 en coupe.

La face extérieure 2 du hayon 1 comporte une ouverture 14 permettant d'accéder à la poignée 10 lorsque le hayon 1 est fermé.

La poignée 10 comporte deux surfaces d'appui 15 et 16.

Ces surfaces d'appui 15 et 16 correspondent respectivement aux faces en regard de parois avant 17 et arrière 18 de la poignée 10.

Les parois avant 17 et arrière 18 sont réunies par une paroi de fond 19 qui prend appui sur une portée 11 du caisson 12.

Les parois avant 17 et arrière 18 viennent en appui, du côté opposé à leurs faces en regard, sur des parois 20 et 21 du caisson 12.

La poignée 10 est réalisée d'un seul tenant en matière plastique et comporte, outre les parois avant 17 et arrière 18 et la paroi de fond 19 qui viennent d'être décrites, une paroi extérieure sensiblement plane 22, qui s'inscrit dans la continuité de la face d'extrémité 4 du hayon 1, ainsi qu'on peut le voir sur les figures 1 et 2.

La paroi extérieure 22 entoure une zone de préhension 23, de forme ergonomique.

La cavité délimitée par les parois avant 17 et arrière 18 et la paroi de fond 19 constitue un renfoncement 24 à l'intérieur de la zone de préhension 23.

La zone de préhension 23 comporte une paroi frontale 25 qui se raccorde à la paroi arrière 18.

La poignée 10 comporte des nervures 28 qui se raccordent à la paroi frontale 25 et viennent en appui sur la portée 11 du caisson 12.

Ces nervures 28 ménagent avec la paroi arrière 18 une gorge 29 dans laquelle s'engage la nervure 21 du caisson 12.

La poignée 10 est fixée sur le caisson 12 par tout moyen de fixation connu, tel que collage, encliquetage ou vissage par exemple. '

Le hayon 1 étant fermé, l'utilisateur appuie pour le relever sur le bouton de commande 30 tout en tirant avec ses dernières phalanges sur la poignée 10, sa main étant engagée dans l'ouverture 14 paume vers le haut.

Les dernières phalanges viennent alors au contact de la surface d'appui 15 constituée par la paroi avant 17.

Pour refermer le hayon, l'utilisateur introduit ses dernières phalanges dans le renfoncement 24, de manière à ce que celles-ci viennent au contact de la surface d'appui 16.

Les premières phalanges de la main de l'utilisateur peuvent à ce moment venir en appui sur la paroi frontale 25 de la zone de préhension 23.

On remarquera que la poignée 10 selon l'invention est particulièrement esthétique car non proéminente.

De plus, elle permet de refermer le hayon 1 sans avoir à appuyer sur la face extérieure 2 de celui-ci.

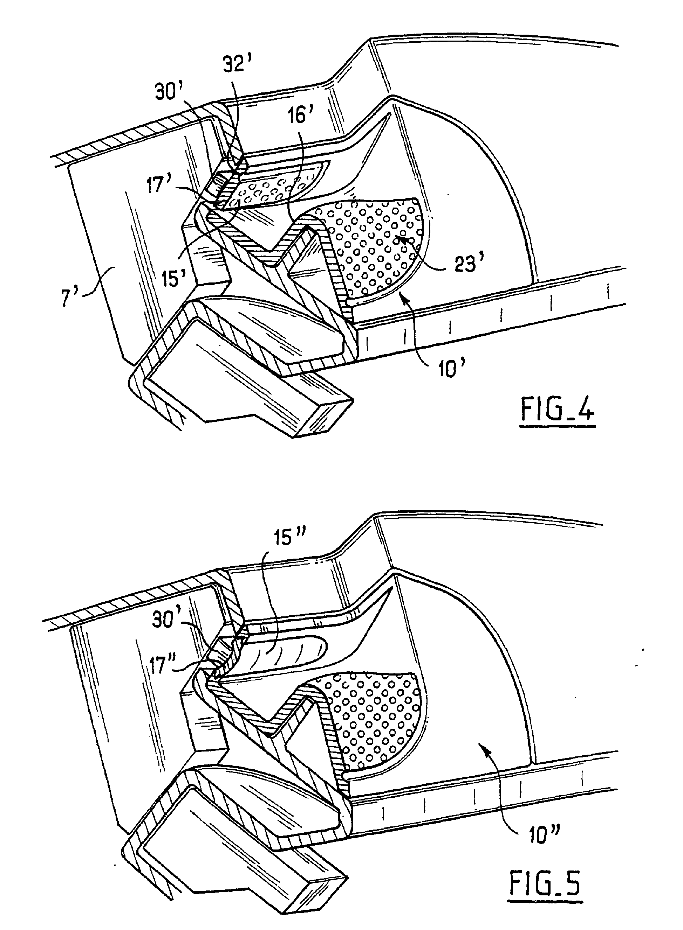

On a représenté sur la figure 4 une première variante de réalisation.

Dans cette variante, la serrure 7 est remplacée par une serrure 7' sans bouton de commande 30 accessible depuis la face extérieure du hayon mais avec un organe de commande 30' intérieur.

La poigné 10 de l'exemple de réalisation précédent est remplacée par une poignée 10' qui diffère de la poignée 10 précédemment décrite par le fait que la paroi avant 17 est remplacée par une paroi mobile 17', en appui sur l'organe de commande 30'.

La paroi 17' est reliée dans l'exemple de réalisation de la figure 4 par une charnière film 32' au reste de la poignée et comporte un bord, à l'opposé de cette charnière film, qui est libre, de sorte que l'utilisateur peut en appuyant sur la paroi mobile 17' actionner l'organe de commande 30'.

La paroi mobile 17' peut présenter du côté de la surface d'appui 15' des reliefs destinés à améliorer la préhension.

Ces reliefs sont avantageusement réalisés au moyen d'un revêtement d'un matériau malléable, afin d'accroître le confort d'utilisation.

La paroi frontale de la zone de préhension 23' de la poignée 10' peut comporter également un tel revêtement.

Dans la poignée 10" représentée sur la figure 5, la paroi mobile 17' précitée est remplacée par une paroi déformable 17" en élastomère, qui peut être fixée par tout moyen approprié sur le reste de la poignée, par exemple être encliquetée ou surmoulée.

Cette paroi déformable définit une surface d'appui 15".

Alors que la paroi mobile 17' de l'exemple de réalisation de la figure 4 comporte un bord libre, la paroi déformable 17" de l'exemple de réalisation de la figure 5 est reliée par son pourtour entier à la matière plastique non élastomère constituant le reste de la poignée, ce qui offre une protection contre la pénétration d'eau ou d'humidité à l'intérieur du caisson.

De plus, l'utilisation pour constituer la paroi déformable 17" d'un élastomère rend l'actionnement de l'organe de commande 30' relativement doux et agréable pour l'utilisateur.

Bien entendu, on ne sort pas du cadre de la présente invention en modifiant la forme de la poignée ainsi que la manière dont celle-ci est fixée sur le hayon, pour autant que ces modifications tombent sous l'étendue de protection de la demande exclusivement définie par les revendications.

## Revendications

1. Ouvrant de véhicule, notamment un hayon (1), comportant une face extérieure (2) et une face d'extrémité (4) à l'opposé de la région d'articulation sur le véhicule, une poignée (10 ; 10' ; 10") étant intégrée dans ladite face d'extrémité (4), **caractérisé par le fait qu'**il comporte une ouverture (14) sur la face extérieure (2) de l'ouvrant pour accéder à ladite poignée (10; 10'; 10") lorsque l'ouvrant est fermé.

2. Ouvrant selon la revendication 1, **caractérisé par le fait que** la poignée (10 ; 10' ; 10") présente deux surfaces d'appui, l'une (15 ; 15' ; 15") servant à l'ouverture de l'ouvrant et l'autre (16) étant utilisée pour sa fermeture.

3. Ouvrant selon la revendication précédente, **caractérisé par le fait que** lesdites surfaces d'appui (15, 16) sont constituées par des parois (17, 18) d'une pièce en matière plastique (10) rapportée sur un caisson (12) de l'ouvrant.

4. Ouvrant selon la revendication précédente, **caractérisé par le fait que** l'une au moins desdites parois (17, 18) s'appuie sur une portée (11) du caisson (12).

5. Ouvrant selon l'une quelconque des revendications 2 à 4, **caractérisé par le fait que** lesdites surfaces d'appui (15, 16) se font face.

6. Ouvrant selon l'une quelconque des revendications précédentes, **caractérisé par le fait que** la poignée (10) comporte une paroi extérieure (22) intégrée dans la face d'extrémité (4) de l'ouvrant, une zone de préhension (23) au centre de cette paroi extérieure et un renfoncement (24) pour recevoir les dernières phalanges de la main de l'utilisateur lors de la fermeture ou de l'ouverture de l'ouvrant.

7. Ouvrant selon l'une quelconque des revendications précédentes, **caractérisé par le fait qu'**il comporte une serrure (7') comprenant un organe de commande (30') et **par le fait que** la poignée (10'; 10") présente une surface d'appui (15') servant à l'ouverture, définie par une paroi mobile (17') et/ou déformable (17") agencée pour agir sur l'organe de commande (30') de la serrure (7') lorsque l'utilisateur exerce une force dessus, lors de l'ouverture de l'ouvrant.

8. Ouvrant selon la revendication précédente, **caractérisé par le fait que** la paroi mobile (17') et/ou déformable est réalisée sous la forme d'une paroi en matière plastique rigide reliée par une charnière film (32') au reste de la poignée (10').

9. Ouvrant selon la revendication 7, **caractérisé par le fait que** la paroi mobile et/ou déformable (17") est réalisée sous la forme d'une paroi souple surmoulée ou rapportée sur le reste de la poignée (10").

10. Ouvrant selon l'une quelconque des revendications précédentes, **caractérisé par le fait que** la surface de la poignée (10'; 10") sur laquelle l'utilisateur appuie comporte un revêtement malléable, destiné à accroître le confort d'utilisation.

## Claims

1. A vehicle door, in particular a tailgate (1), the door comprising an outside face (2) and an end face (4) opposite from a region where it is hinged at the vehicle, a handle (10 ; 10' ; 10") integrated in the end face (4), the door being **characterized by** the fact that it includes an opening (14) in the outside face (2) of the door to give access to said handle (10, 10', 10") when the door is closed.

2. A door according to claim 1, **characterized by** the fact that the handle (10 ; 10' ; 10 ") has two bearing surfaces, one bearing surface (15 ; 15' ; 15") serving to open the door, and the other being used to close it.

3. A door according to the preceding claim, **characterized by** the fact that said bearing surfaces (15, 16) are constituted by integrally-formed walls (17, 18) of plastics material (10) fitted to a box structure (12) of the door.

4. A door according to the preceding claim, **characterized by** the fact that at least one of said walls (17, 18) bears against a bearing surface (11) of the box structure (12).

5. A door according to any one of claims 2 to 4, **characterized by** the fact that said bearing surfaces (15,16) face each other.

6. A door according to any one of preceding claims, **characterized by** the fact that the handle (10) has an outside wall (22) integrated in the end face (4) of the door, a grip zone (23) in the center of said outside wall, and a setback (24) for receiving the last phalanges of the user's hand while opening or closing the door.

7. A door according to any one of preceding claims, **characterized by** the fact that it includes a lock (7') having a control member (30'), and by the fact that the handle (10', 10") presents a bearing surface (15') that is used for opening and that is defined by a moving (17') and/or deformable (17") wall arranged to act on the control member (30') of the lock (7') while the user is exerting a force on it when opening the door.

8. A door according to the preceding claim, **characterized by** the fact that the moving (17') and/or deformable wall is made in the form of a wall of rigid plastics material connected via a film hinge (32') to the remainder of the handle.

9. A door according to claim 7, **characterized by** the fact that the moving and/or deformable (17") wall is made in the form of a flexible wall overmolded or fitted on the remainder of the handle (10").

10. A door according to any preceding claim, **characterized by** the fact that the surface of the handle (10' ; 10") against which the user bears has a malleable covering in order to increase user comfort.

## Patentansprüche

1. Türflügel eines Fahrzeuges, insbesondere eine Heckklappe (1), die eine Außenfläche (2) und eine Randfläche (4) gegenüber dem Schwenkbereich am Fahrzeug und einem Handgriff (10; 10'; 10") aufweist, wobei dieser in die Randfläche (4) integriert ist, **dadurch gekennzeichnet, dass** es in der Außenfläche (2) des Türflügels eine Öffnung (14) umfasst, damit der Handgriff (10; 10'; 10") zugänglich bleibt, wenn der Türflügel geschlossen ist.

2. Türflügel nach Anspruch 1, **dadurch gekennzeichnet, dass** der Handgriff (10; 10'; 10") zwei Auflageflächen hat, wobei die eine (15; 15'; 15") zum Öffnen des Türflügels und die andere (16) zu deren Schließen dient.

3. Türflügel nach dem vorhergehenden Anspruch, **dadurch gekennzeichnet, dass** die Auflageflächen (15, 16) aus in einem Stück gefertigten Wandungen (17, 18) aus Kunststoff (10) bestehen, die an einem Kastenteil (12) des Türflügels befestigt werden.

4. Türflügel nach dem vorhergehenden Anspruch, **dadurch gekennzeichnet, dass** mindestens eine der Wandungen (17, 18) auf einer tragenden Fläche (11) des Kastenteils (12) aufliegt.

5. Türflügel nach einem beliebigen der Ansprüche 2 bis 4, **dadurch gekennzeichnet, dass** die Auflageflächen (15, 16) einander gegenüberliegen.

6. Türflügel nach einem beliebigen der vorhergehenden Ansprüche, **dadurch gekennzeichnet, dass** der Handgriff (10) eine äußere Wandung (22), die in die Randfläche (4) des Türflügels integriert ist, eine Griffzone (23) in der Mitte dieser äußeren Wandung und einen Absatz (24) umfasst, um zum Schließen oder zum Öffnen des Türflügels die Fingerkuppen der Hand des Benutzers aufzunehmen.

7. Türflügel nach einem beliebigen der vorstehenden Ansprüche, **dadurch gekennzeichnet, dass** er eine Verriegelung (7') aufweist, die aus einem Betätigungsteil (30') besteht, und dass der Handgriff (10'; 10") eine Auflagefläche (15') hat, die zum Öffnen dient, wobei sie durch eine bewegliche Wandung (17') und/oder eine verformbare (17") Wandung definiert wird, die so aufgebaut ist, dass sie auf das Betätigungsteil (30') der Verriegelung (7') einwirkt, wenn der Benutzer beim Öffnen des Türflügels darauf eine Kraft ausübt.

8. Türflügel nach dem vorhergehenden Anspruch, **dadurch gekennzeichnet, dass** die bewegliche und/oder verformbare Wandung (17') in Form einer Wandung aus starrem Kunststoff gebildet wird, die über ein biegsames Scharnier (32') mit dem restlichen Handgriff (10') verbunden ist.

9. Türflügel nach Anspruch 7, **dadurch gekennzeichnet, dass** die bewegliche und/oder verformbare Wandung (17") in Form einer biegsamen Wandung ausgebildet ist, die an dem restlichen Handgriff (10") angegossen oder befestigt ist.

10. Türflügel nach einem beliebigen der vorhergehenden Ansprüche, **dadurch gekennzeichnet, dass** die Oberfläche des Handgriffes (10'; 10"), auf die der Benutzer einwirkt, einen verformbaren Überzug hat, der dem Bedienkomfort dienen soll.
